(19) Europäisches Patentamt
European Patent Office
Office européen des brevets

(11) EP 4 536 385 B1

(12) **EUROPEAN PATENT SPECIFICATION**

(45) Date of publication and mention of the grant of the patent:
**04.03.2026 Bulletin 2026/10**

(21) Application number: **23729115.8**

(22) Date of filing: **26.05.2023**

(51) International Patent Classification (IPC):
***B01D 67/00*** (2006.01) ***B01D 71/68*** (2006.01)
***B01D 71/76*** (2006.01) ***B01D 71/82*** (2006.01)
***B01D 69/02*** (2006.01)

(52) Cooperative Patent Classification (CPC):
**B01D 71/82; B01D 67/0011; B01D 69/02; B01D 71/68; B01D 71/76;** B01D 2323/21819; B01D 2323/21823; B01D 2325/36; Y02E 60/50

(86) International application number:
**PCT/EP2023/064280**

(87) International publication number:
**WO 2023/237365 (14.12.2023 Gazette 2023/50)**

(54) **FILTRATION MEMBRANE WITH IMPROVED HYDROPHILICITY**

FILTRATIONSMEMBRAN MIT VERBESSERTEN HYDROPHILEN EIGENSCHAFTEN

MEMBRANE DE FILTRATION À HYDROPHILIE AMÉLIORÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.06.2022 EP 22178054**

(43) Date of publication of application:
**16.04.2025 Bulletin 2025/16**

(73) Proprietor: **BASF SE**
**67056 Ludwigshafen am Rhein (DE)**

(72) Inventors:
- **WEBER, Martin**
  **67056 Ludwigshafen am Rhein (DE)**
- **GRONWALD, Oliver**
  **67056 Ludwigshafen am Rhein (DE)**
- **STRAUCH, Joachim**
  **67056 Ludwigshafen am Rhein (DE)**

(74) Representative: **BASF IP Association**
**BASF SE**
**GBI-C006**
**67056 Ludwigshafen (DE)**

(56) References cited:
**WO-A1-2017/148850** **WO-A1-2019/016078**
**WO-A1-2019/016082**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 536 385 B1

## Description

The present invention relates to a process for the preparation of a membrane (M) containing a sulfonated polyarylenesulfone polymer (sP) and at least one further polymer (fP), the membrane (M) obtained by the inventive process, a filtration (nano-, ultra- or microfiltration) system comprising the membrane (M), and the use of the membrane (M) in filtration processes.

Polyarylenesulfone polymers are high-performance thermoplastics in that they feature high heat resistance, good mechanical properties and inherent flame retardancy (E.M. Koch, H.-M. Walter, Kunststoffe 80 (1990) 1146*;* E. Döring, Kunststoffe 80, (1990) 1149*,* N. Inchaurondo-Nehm, Kunststoffe 98, (2008) 190). They are highly biocompatible and so are used as material for dialysis membranes (N. A. Hoenich, K. P. Katapodis, Biomaterials 23 (2002) 3853) and ultrafiltration (UF) membranes. Ultrafiltration membranes (UF) are supposed to have an active filtration layer possessing a molecular weight cut-off from 10 to 100 kDa corresponding to 10 to 30 nm pore size to remove yeast, bacteria, virus and macromolecules efficiently from water. As an elevated hydrophilicity of membranes is considered to prevent performance losses by fouling effects (D. Rana et al. "Surface modifications for antifouling membranes", Chemical Reviews, 2010, 110, 2448), sulfonated poly(arylene sulfone) polymers are also considered for membrane applications.

Besides the use as engineering plastics, polyarylenesulfone polymers are also used as membrane material for water treatment.

Polyarylenesulfone polymers can be formed *inter alia* either via the hydroxide method, wherein a salt is first formed from the dihydroxy component and the hydroxide, or via the carbonate method.

General information regarding the formation of polyarylenesulfone polymers by the hydroxide method is found *inter alia* in R.N. Johnson et. al., J. Polym. Sci. A-1 5 (1967) 2375*,* while the carbonate method is described in J.E. McGrath et. al., Polymer 25 (1984) 1827*.*

Methods of forming polyarylenesulfone polymers from aromatic bishalogen compounds and aromatic bisphenols or salts thereof in an aprotic solvent in the presence of one or more alkali metal or ammonium carbonates or bicarbonates are known to a person skilled in the art and are described in EP-A 297 363 and EP-A 135 130, for example.

WO 2019/016082 A1 discloses a process for the preparation of a sulfonated polyarylene ether sulfone polymer (sP) by converting a reaction mixture (RG) which comprises at least one non-sulfonated aromatic dihalogen sulfone, at least one sulfonated aromatic dihalogen sulfone, at least one aromatic dihydroxy component comprising trimethylhydroquinone, at least one carbonate component and at least one aprotic polar solvent, wherein the sulfonated polyarylene ether sulfone polymer (sP) can be used in a membrane (M).

WO 2017/148850 A1 discloses a method for the preparation of a membrane (M) which comprises an organic polymer of intrinsic microporosity (PIM) and a sulfonated polyarylenesulfone polymer (sP).

WO 2019/016078 A1 discloses a process for the preparation of a polyarylethersulfone-polyalkylene oxide block copolymer (PPC) comprising step I) converting a reaction mixture (RG) comprising as components (A1) at least one aromatic dihalogen sulfone, (B1) at least one aromatic dihydroxy component comprising trimethylhydroquinone, (B2) at least one polyalkylene oxide, (C) at least one carbonate component, (D) at least one aprotic polar solvent, wherein the polyarylethersulfone-polyalkylene oxide block copolymer (PPC) can be used in a membrane.

High-performance thermoplastics such as polyarylenesulfone polymers are formed by polycondensation reactions which are typically carried out at a high reaction temperature in polar aprotic solvents, for example DMF (dimethylformamide), DMAc (dimethylacetamide), sulfolane, DMSO (dimethylsulfoxide) and NMP (N-methylpyrrolidone).

Sulfonated polyarylenesulfone polymers are known since decades. While the direct sulfonation of polyarylenesulfone polymers is leading to side reactions and allows only limited control on the degree of sulfonation, the use of the di-sulfonated aromatic dihalogensulfones, like sulfonated dichlorodiphenylsulfone (sDCDPS) as co-monomer allows the synthesis of well-defined sulfonated polyarylenesulfone polymers.

Although sulfonated polyarylenesulfone polymers show several interesting properties, however, it has not yet been possible to produce nanofiltration membranes from poly(arylene sulfone) polymers that have a low molecular weight cut-off and high water permeation at the same time.

It is therefore an object of the present invention to provide a process for the preparation of a membrane (M) containing a sulfonated polyarylenesulfone polymer (sP) and at least one further polymer (fP) which does not retain the disadvantages of the prior art or only in diminished form. The process should be easy to carry out. The membrane (M) should be suitable for the use in dialysis and ultrafiltration.

This object is achieved by a process for the preparation of a membrane (M) containing a sulfonated polyarylenesulfone polymer (sP) and at least one further polymer (fP) comprising the steps

i) converting a reaction mixture ($R_G$) comprising

an aromatic dihalogensulfone component (component (A)) comprising at least one sulfonated aromatic dihalogensulfone (component (A1)), and at least one non sulfonated aromatic dihalogensulfone (component (A2)),
at least one aromatic dihydroxy compound (component (B)),

at least on carbonate compound (component (C)), and
at least one aprotic polar solvent (component (D)),
to obtain a product mixture ($P_G$) comprising the sulfonated polyarylenesulfone polymer (sP), the at least one aprotic polar solvent and at least one inorganic halide compound,

ii) separating the at least one inorganic halide compound from the product mixture ($P_G$) to obtain a first solution (S1) comprising the sulfonated polyarylenesulfone polymer (sP) and the at least one aprotic polar solvent,
iii) mixing at least one further polymer (fP) with the first solution (S1) to obtain a second solution (S2),
iv) separating the at least one aprotic polar solvent from the second solution (S2) to obtain the membrane (M) containing the sulfonated polyarylenesulfone polymer (sP) and the at least one further polymer (fP),
wherein in step iii) additionally at least one pore forming agent (pA) is mixed with the first solution (S1) to obtain the second solution (S2) and wherein the at least one further polymer (fP) is at least one polyarylenesulfone polymer which may be sulfonated or unsulfonated and wherein the sulfonated polyarylenesulfone polymer (sP) and the at least one further polymer (fP) are different from each other, wherein
component (A1) comprises at least one compound selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt, and
component (A2) comprises not less than 80 wt% of at least one aromatic dihalogensulfone selected from the group consisting of 4,4'-dichlorodiphenylsulfone and 4,4'-difluorodiphenylsulfone, based on the overall weight of component (A2) in reaction mixture ($R_G$), and
component (B) is selected from the group consisting of 4,4'-dihydroxybiphenyl, 4,4'-dihydroxydiphenylsulfone, bisphenol A (2,2-bis(4-hydroxyphenyl)propane), 4,4'-dihydroxybenzophenone, hydroquinone and hydrochinone derivatives, and in step i) a reaction mixture ($R_G$) is converted comprising

| | |
|---|---|
| X mol | of an aromatic dihalogensulfone component (component A)) comprising, based on the total molar amount of the aromatic dihalogensulfone component (component A)) in the reaction mixture ($R_G$), |
| $X^1$ mol.-% | of at least one sulfonated aromatic dihalogensulfone (component (A1)), and |
| $X^2$ mol.-% | of at least one non sulfonated aromatic dihalogensulfone (component (A2)), wherein |
| $X^1$ | is in the range of 2 to 70 and |
| $X^2$ | is in the range of 30 to 98, |
| Y mol | of at least one aromatic dihydroxy compound (component (B)) |
| Z mol | of at least one carbonate compound (component (C)), |

wherein
the ratio of X to Y is in the range of 0.95 to 1.08,
and wherein
Z is in the range of P to Q,
wherein P is calculated according to the following equation:

$$P = Y^*(1.05 + X^1/100^*1.05),$$

and wherein Q is calculated according to the following equation:

$$Q = Y^*(1.05 + X^1/100^*1.4),$$

wherein component (A) comprises 2 to 70 mol.-% of component (A1) and 30 to 98 mol.-% of component (A2) based on the total molar amount of component (A) in the reaction mixture ($R_G$) and wherein in step i) the molar ratio of component (A) to component (B) is from 0.95 to 1.08, and wherein
the sulfonated polyarylenesulfone polymer (sP) in the first solution (S1) in step ii) remains in dissolved form before step iii) is conducted.

It has surprisingly been found, that by the inventive process membranes (M) are obtained that show improved hydrophilicity, improved pure water permeability (PWP), and improved molecular weight cut of (MWCO). By the inventive process the preparation time of membranes (M) containing sulfonated polyarylenesulfone polymers (sP) can be reduced significantly. The condensation according to step i) leads to polymer suspensions containing the sulfonated polyarylenesulfone polymer (sP) and inorganic halide salts. After separation of the salts, in the state of the art usually precipitation in isopropanol is done to isolate the sulfonated polyarylenesulfone polymers (sP), which causes huge volumes of solvent mixtures that need to be reworked or disposed.

Furthermore, a part of the product is not completely precipitated and may lead to clogging of filters during subsequent separation. Moreover, for production of the membranes (M), the sulfonated copolymers have to be dissolved again. The invention process prevents the production of huge quantities of solvent mixtures and circumvents the separation prior to the preparation of membranes.

The present invention will be described in more detail hereinafter.

## Process

The inventive process for the preparation of the membrane (M) containing the sulfonated polyarylenesulfone polymer (sP) and at least one further polymer (fP) comprises the steps i), ii), iii) and iv).

In the context of the present invention, the term "membrane (M)" means a semipermeable structure capable of separating two fluids or separating molecular and/or ionic components or particles from a liquid. Thus, a membrane acts as a selective barrier, allowing some particles, substances or chemicals to pass through, while retaining others. The membrane (M) may have various geometries such as flat sheet, spiral wound, pillows, tubular, single bore hollow fiber or multiple bore hollow fiber.

The membrane (M) can be used as nanofiltration membrane.

A further object of the present invention is therefore also the use of the membrane (M) as nanofiltration membrane.

*Step i)*

In step i) according to the invention a reaction mixture ($R_G$) is converted comprising an aromatic dihalogensulfone component, at least one aromatic dihydroxy compound, at least one carbonate compound, and at least one aprotic polar solvent to obtain a product mixture ($P_G$) comprising the sulfonated polyarylenesulfone polymer (sP), the at least one aprotic polar solvent and at least one inorganic halide compound.

The aromatic dihalogensulfone component is also referred to as component (A). The terms aromatic dihalogensulfone component and component (A) in the present invention are used synonymously and therefore have the same meaning.

The at least one aromatic dihydroxy compound is also referred to as component (B). The terms at least one aromatic dihydroxy compound and component (B) in the present invention are used synonymously and therefore have the same meaning.

The at least one carbonate compound is also referred to as component (C). The terms at least one carbonate compound and component (C) in the present invention are used synonymously and therefore have the same meaning.

The at least one aprotic polar solvent is also referred to as component (D). The terms at least one aprotic polar solvent and component (D) in the present invention are used synonymously and therefore have the same meaning.

The reaction mixture ($R_G$) is the mixture which is provided in step i) for forming the sulfonated polyarylenesulfone polymer (sP) comprised in the product mixture ($P_G$). All components herein in relation to the reaction mixture ($R_G$) thus relate to the mixture which is present before the conversion, i.e. the polycondensation, according to step i).

The polycondensation takes place to convert reaction mixture ($R_G$) into the production mixture ($P_G$) comprising the sulfonated polyarylenesulfone polymer (sP), by polycondensation of components (A), and (B).

In step i) components (A) and (B) enter the polycondensation reaction. Component (C) acts as a base to deprotonate the hydroxyl groups of component (B). Component (D) acts as a solvent.

The product mixture ($P_G$) obtained after the polycondensation according to step i) comprises the sulfonated polyarylenesulfone polymer (sP). The product mixture ($P_G$) furthermore comprises the at least one inorganic halide compound and the at least one aprotic polar solvent (component (D)). The at least one inorganic halide compound is formed during the conversion of the reaction mixture ($R_G$). During the conversion, component (C) reacts with component (B) to deprotonate component (B). Deprotonated component (B) then reacts with component (A), wherein the at least one inorganic halide compound is formed. This process is known to the person skilled in the art.

The components of the reaction mixture ($R_G$) are preferably reacted concurrently. The individual components may be mixed in an upstream step and subsequently be reacted. It is also possible to feed the individual components into a reactor in which these are mixed and then reacted.

In step i) of the inventive process, the individual components of the reaction mixture ($R_G$) are preferably reacted concurrently. This reaction is preferably conducted in one stage. This means, that the deprotonation of component (B) and also the condensation reaction between components (A) and (B) preferably take place in a single reaction stage without isolation of the intermediate products, for example the deprotonated species of component (B).

It is furthermore preferred that the reaction mixture ($R_G$) provided in step i) does not comprise toluene or monochlorobenzene. It is particularly preferred that the reaction mixture ($R_G$) does not comprise any substance which forms an azeotrope with water. The same preferably applies to the product mixture ($P_G$).

The ratio of component (A) and component (B) in step i) derives in principle from the stoichiometry of the polycondensation reaction which proceeds with theoretical elimination of hydrogen halide, preferably hydrogen chloride, and is established by the person skilled in the art in a known manner.

Preferably, in step i) the ratio of halogen end groups derived from component (A) to phenolic end groups derived from component (B) is adjusted by controlled establishment of an excess of component (A) in relation to component (B) as starting compound.

In step i) the molar ratio of component (A) to component (B) is from 0.95 to 1.08, especially from 0.98 to 1.06, most preferably from 0.985 to 1.05.

Preferably, the conversion in the polycondensation reaction in step i) is at least 0.9.

The polycondensation reaction in step i) is generally conducted at temperatures in the range from 80 to 250°C, preferably in the range from 100 to 220 °C. The upper limit of the temperature is preferably determined by the boiling point of the at least one aprotic polar solvent (component (D)) at standard pressure (1013.25 mbar). The reaction is generally carried out at standard pressure. The reaction is preferably carried out over a time interval of 0.5 to 14 h, particularly in the range from 1 to 12 h.

In step i) a reaction mixture ($R_G$) is converted comprising

| | |
|---|---|
| X mol | of an aromatic dihalogensulfone component (component A)) comprising, based on the total molar amount of the aromatic dihalogensulfone component (component A)) in the reaction mixture ($R_G$), |
| $X^1$ mol.-% | of at least one sulfonated aromatic dihalogensulfone (component (A1)), and |
| $X^2$ mol.-% | of at least one non sulfonated aromatic dihalogensulfone (component (A2)), wherein |
| $X^1$ | is in the range of 2 to 70 and |
| $X^2$ | is in the range of 30 to 98, |
| Y mol | of at least one aromatic dihydroxy compound (component (B)) |
| Z mol | of at least one carbonate compound (component (C)), |

wherein

the ratio of X to Y is in the range of 0.95 to 1.08,

and wherein

Z is in the range of P to Q,

wherein P is calculated according to the following equation:

$$P = Y^*(1.05 + X^1/100^*1.05),$$

and wherein Q is calculated according to the following equation:

$$Q = Y^*(1.05 + X^1/100^*1.4).$$

In a preferred embodiment the sulfonated polyarylenesulfone polymer (sP) obtained in step i) is not separated from the product mixture ($P_G$).

In one embodiment between step i) and step ii) no further process steps are conducted. In a further preferred embodiment, the sulfonated polyarylenesulfone polymer (sP) in the product mixture ($P_G$) obtained step i) remains in dissolved form before step ii) is conducted.

The components used in step i) are described hereinafter in more detail.

*Component (A)*

Component (A), which is also referred to as the aromatic dihalogensulfone component, comprises at least one sulfonated aromatic dihalogensulfone and at least one non sulfonated aromatic dihalogensulfone.

The at least one sulfonated aromatic dihalogensulfone is also referred to as component (A1). The terms at least one sulfonated aromatic dihalogensulfone and component (A1) in the present invention are used synonymously and therefore have the same meaning.

The at least one non sulfonated aromatic dihalogensulfone is also referred to as component (A2). The terms at least one non sulfonated aromatic dihalogensulfone and component (A2) in the present invention are used synonymously and therefore have the same meaning.

What is meant herein by "at least one sulfonated aromatic dihalogensulfone" is precisely one sulfonated aromatic dihalogensulfone and also mixtures of two or more sulfonated aromatic dihalogensulfones. Preferably precisely one sulfonated aromatic dihalogensulfone is used.

What is meant herein by "at least one non sulfonated aromatic dihalogensulfone" is precisely one non sulfonated aromatic dihalogensulfone and also mixtures of two or more non sulfonated aromatic dihalogensulfones. Preferably precisely one non sulfonated aromatic dihalogensulfone is used.

In the preferred embodiment described above "X" preferably means the amount of mol of component (A) in the reaction mixture ($R_G$) in step i). "X" herein preferably means the total molar amount of the aromatic dihalogensulfone component (component (A)) in the reaction mixture ($R_G$) in step i). In other words "X" means preferably the sum of the molar amount of component (A1) and component (A2) contained in component (A), preferably contained in the reaction mixture ($R_G$). "$X^1$" herein means the molar amount in mol.-% of component (A1) and "$X^2$" herein means the molar amount in mol.-% of component (A2), based on the total molar amount of component (A) in the reaction mixture ($R_G$).

$X^1$ may be in the range of 2 to 70 mol.-%, preferably in the range of 5 to 65 mol.-%, more preferably in the range of 7.5 to 60 mol.-%, and most preferably in the range of 10 to 57.5 mol.-%, in each case based on the total molar amount of the aromatic dihalogensulfone component (component (A)) in the reaction mixture ($R_G$).

$X^2$ may be in the range of 30 to 98 mol.-%, preferably in the range of 35 to 95 mol.-%, more preferably in the range of 40 to 92.5 mol.-%, and most preferably in the range of 42.5 to 90 mol.-%, in each case based on the total molar amount of the aromatic dihalogensulfone component (component (A)) in the reaction mixture ($R_G$).

The amount of $X^1$ and $X^2$ generally adds up to 100 mol.-%.

Component (A) comprises 2 to 70 mol.-% of component (A1) and 30 to 98 mol.-% of component (A2) based on the total molar amount of component (A) in the reaction mixture ($R_G$).

In a more preferred embodiment component (A) comprises 5 to 65 mol.-% of component (A1) and 35 to 95 mol.-% of component (A2) based on the total molar amount of component (A) in the reaction mixture ($R_G$).

In an even more preferred embodiment component (A) comprises 7.5 to 60 mol.-% of component (A1) and 40 to 92.5 mol.-% of component (A2) based on the total molar amount of component (A) in the reaction mixture ($R_G$).

In a particular preferred embodiment component (A) comprises 10 to 57.5 mol.-% of component (A1) and 42.5 to 90 mol.-% of component (A2) based on the total molar amount of component (A) in the reaction mixture ($R_G$).

*Component (A1)*

Component (A1), which is also referred to as the sulfonated aromatic dihalogensulfone comprises preferably at least one $-SO_3X^3$ group.

Component (A1) preferably comprises at least one $-SO_3X^3$ group. What is meant herein by "at least one $-SO_3X^3$ group" is that component (A1) can comprise precisely one $-SO_3X^3$ group and also two or more $-SO_3X^3$ groups. Component (A1) more preferably comprises two $-SO_3X^3$ groups.

The general formula $-SO_3X^3$ comprises the sulfonic acid functional group and also derivatives of sulfonic acid functional groups such as sulfonates. In the $-SO_3X^3$ group(s) $X^3$ may be hydrogen and/or one cation equivalent.

By "one cation equivalent" in the context of the present invention is meant one cation of a single positive charge or one charge equivalent of a cation with two or more positive charges, for example Li, Na, K, Mg, Ca, $NH_4$, preferably Na, K. Particularly preferred is Na or K.

Component (A1) is preferably selected from the group consisting of 4,4'-dichlorodiphenylsulfone-3,3'-disulfonic acid and 4,4'-difluorodiphenylsulfone-3,3'-disulfonic acid, and derivatives thereof.

The terms "sulfonic acid" and "$-SO_3X^3$ group" in the context of the present invention are used synonymously and have the same meaning. The term "sulfonic acid" in the 4,4'-dichlorodiphenylsulfone-3,3'-disulfonic acid and 4,4'-difluorodiphenylsulfone-3,3'-disulfonic acid therefore means "$\sim SO_{03,}X^3$ group", wherein $X^3$ is hydrogen or a cation equivalent.

In one embodiment, component (A1) preferably comprises $-SO_3X^3$ groups with a cation equivalent. Component (A1) is selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt.

Another object of the present invention therefore is a process, wherein component (A1) comprises at least one

compound selected from the group consisting of 4,4'-dichlorodiphenylsulfone-3,3'-disulfonic acid, 4,4'-dichloro-diphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt.

In one embodiment, component (A1) comprises not less than 70 wt%, preferably not less than 90 wt%, and more preferably not less than 98 wt% of at least one aromatic dihalogensulfone component comprising at least one $-SO_3X^3$ group selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt, based on the overall weight of component (A1) in the reaction mixture ($R_G$).

In a further particularly preferred embodiment, component (A1) consists of at least one aromatic dihalogensulfone comprising at least one $-SO_3X^3$ group selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt.

In these embodiments, 4,4'-dichlorodiphenylsulfone-3,3'-disulfonic acid dipotassium salt and 4,4'-dichlorodiphenylsulfone-3,3'-disulfonic acid disodium salt are particularly preferable for use as component (A1).

In a further, particularly preferred embodiment, component (A1), consists of 4,4'-dichlorodiphenylsulfone-3,3'-disulfonic acid dipotassium salt or 4,4'-dichlorodiphenylsulfone-3,3'-disulfonic acid disodium salt and mixtures thereof.

*Component (A2)*

Component (A2), which is also referred to as the non sulfonated aromatic dihalogensulfone component comprises preferably no $-SO_3X^3$ groups.

Component (A2) comprises not less than 80 wt%, preferably not less than 90 wt%, and more preferably not less than 98 wt% of at least one aromatic dihalogensulfone selected from the group consisting of 4,4'-dichlorodiphenylsulfone and 4,4'-difluorodiphenylsulfone, based on the overall weight of component (A2) in reaction mixture ($R_G$). The weight percentages here in relation to component (A2) further relate to the total sum of the 4,4'-dichlorodiphenylsulfone used and of the 4,4'-difluorodiphenylsulfone used.

Another object of the present invention therefore is a process, wherein component (A2) comprises not less than 80 wt% of the at least one aromatic dihalogensulfone selected from the group consisting of 4,4'-dichlorodiphenylsulfone and 4,4'-difluorodiphenylsulfone, based on the overall weight of component (A2) in reaction mixture ($R_G$).

In a further particularly preferred embodiment, component (A2) consists of at least one aromatic dihalogensulfone selected from the group consisting of 4,4'-dichlorodiphenylsulfone and 4,4'-difluorodiphenylsulfone.

In these embodiments, 4,4'-dichlorodiphenylsulfone is particularly preferable for use as component (A2).

In a further, particularly preferred embodiment, component (A2), consists of 4,4'-dichlorodiphenylsulfone.

Preferably, component (A2) is selected from the group consisting of 4,4'-dichlorodiphenylsulfone and 4,4'-difluorodiphenylsulfone.

*Component (B)*

Component (B), which is also referred to as the aromatic dihydroxy compound generally comprises two hydroxy groups.

What is meant herein by "at least one aromatic dihydroxy compound" is precisely one aromatic dihydroxy compound and also mixtures of two or more aromatic dihydroxy compounds. Preferably precisely one aromatic dihydroxy compound is used.

In the preferred embodiment described above "Y" preferably means the amount of mol of component (B) in the reaction mixture ($R_G$) in step i). "Y" herein preferably means the total molar amount of the aromatic dihydroxy compound (component (B)) in the reaction mixture ($R_G$) in step i).

Component (B) is selected from the group consisting of 4,4'-dihydroxybiphenyl, 4,4'-dihydroxydiphenylsulfone, bisphenol A (2,2-bis(4-hydroxyphenyl)propane), 4,4'-dihydroxybenzophenone, hydroquinone and hydrochinone derivatives. From among the aforementioned aromatic dihydroxy components, 4,4'-dihydroxybiphenyl, 4,4'-dihydroxydiphenyl sulfone and bisphenol A are preferable, while 4,4'-dihydroxybiphenyl is particularly preferable.

The present invention accordingly also provides a method wherein component (B) is selected from the group consisting of 4,4'-dihydroxybiphenyl, 4,4'-dihydroxydiphenyl sulfone, bisphenol A, 4,4'-dihydroxybenzophenone and hydroquinone.

Preferably, component (B) comprises not less than 80 wt%, preferably not less than 90 wt% and more preferably

not less than 98 wt% of 4,4'-dihydroxybiphenyl, based on the overall weight of component (B) in reaction mixture ($R_G$).

Another object of the present invention therefore is a process, wherein component (B) comprises not less than 80 wt% 4,4'-dihydroxybiphenyl, based on the overall weight of component (B) in reaction mixture ($R_G$).

The weight percentages here in relation to component (B) further relate to the total sum of the 4,4'-dihydroxybiphenyl, 4,4'-dihydroxydiphenyl sulfone, bisphenol A (2,2-bis-(4-hydroxyphenyl)propane), 4,4'-dihydroxybenzophenone and hydroquinone used.

In a further particularly preferred embodiment, component (B) consists of at least one aromatic dihydroxy component selected from the group consisting of 4,4'-dihydroxybiphenyl, 4,4'-dihydroxydiphenylsulfone, bisphenol A (2,2-bis(4-hydroxyphenyl)propane), 4,4'-dihydroxybenzophenone and hydroquinone.

In these embodiments, 4,4'-dihydroxybiphenyl, bisphenol A and 4,4'-dihydroxydiphenylsulfone are particularly preferable for use as component (B), while 4,4'-dihydroxybiphenyl is most preferable.

*Component (C)*

The reaction mixture ($R_G$) comprises at least one carbonate compound as component (C). The term "at least one carbonate compound" in the present case, is understood to mean exactly one carbonate compound and also mixtures of two or more carbonate compounds. The at least one carbonate compound is preferably at least one metal carbonate. The metal carbonate is preferably anhydrous. In the present case the terms "at least one carbonate compound" and "component (C)" are used synonymously and therefore have the same meaning.

Preference is given to alkali metal carbonates and/or alkaline earth metal carbonates as metal carbonates. At least one metal carbonate selected from the group consisting of sodium carbonate, potassium carbonate and calcium carbonate is particularly preferred as metal carbonate. Potassium carbonate is most preferred.

For example, component (C) comprises not less than 50 wt%, more preferred not less than 70 wt% by weight and most preferred not less than 90 wt% of potassium carbonate based on the total weight of the at least one carbonate component in the reaction mixture ($R_G$).

Another object of the present invention therefore is a process, wherein component (C) comprises not less than 50 wt% of potassium carbonate based on the total weight of component (C) in the reaction mixture ($R_G$).

In a preferred embodiment component (C) consists of potassium carbonate. Potassium carbonate having a volume weighted average particle size of less than 200 μm is preferred as potassium carbonate more preferred less than 100 μm more even more preferred less than 70 μm and most preferred less than 50 μm. The volume weighted average particle size of the potassium carbonate is determined in a suspension of potassium carbonate in a mixture chlorobenzene/sulfolane (60/40 by weight) using a particle size analyser.

In the preferred embodiment described above "Z" preferably means the amount of mol of component (C) in the reaction mixture ($R_G$) in step i). "Z" herein means preferably the total molar amount of the at least one carbonate component (component (C)) in the reaction mixture ($R_G$).

Z is in the range of P to Q.

"P" is calculated according to the following equation:

$$P = Y*(1.05 + X^1/100*1.05)$$

"Q" is calculated according to the following equation:

$$Q = Y*(1.05+X^1/100*1.4)$$

In this equations Y is the value of the molar amount of component (B) in the reaction mixture ($R_G$) and $X^1$ is also the value of the mol.-% of component (A1) in reaction mixture ($R_G$).

*Component (D)*

The reaction mixture ($R_G$) comprises preferably at least one aprotic polar solvent as component (D). "At least one aprotic polar solvent", according to the invention, is understood to mean exactly one aprotic polar solvent and also mixtures of two or more aprotic polar solvents. In the present case the terms "at least one aprotic polar solvent" and "component (D)" are used synonymously and therefore have the same meaning.

Suitable aprotic polar solvents are, for example, selected from the group consisting of anisole, dimethylformamide, dimethylsulfoxide, sulfolane, N-methylpyrrolidone, N-ethylpyrrolidone and N-dimethylacetamide.

Preferably, component (D) is selected from the group consisting of N-methylpyrrolidone, N-dimethylacetamide, dimethylsulfoxide and dimethylformamide. N-methylpyrrolidone is particularly preferred as component (D).

It is preferred that component (D) comprises not less than 50 wt%, preferably not less than 70 wt% and more preferably not less than 90 wt% of at least one solvent selected from the group consisting of N-methylpyrrolidone, N-dimethylacetamide, dimethylsulfoxide and dimethylformamide based on the total weight of component (D) in the reaction mixture ($R_G$). N-methylpyrrolidone is particularly preferred as component (D).

Another object of the present invention therefore is a process, wherein component (D) comprises not less than 50 wt% of at least one solvent selected from the group consisting of N-methylpyrrolidone, N-dimethylacetamide, dimethylsulfoxide and dimethylformamide based on the total weight of component (D) in the reaction mixture ($R_G$).

In a preferred embodiment, component (D) consists of N-methylpyrrolidone. N-methylpyrrolidone is also referred to as NMP or N-methyl-2-pyrrolidone.

The sulfonated polyarylenesulfone polymers (sP) obtained in step i) is described hereinafter in more detail.

*Sulfonated polyarylenesulfone polymers (sP) obtained in step i)*

The Sulfonated polyarylenesulfone polymers (sP) obtained in step i) of the inventive process preferably comprise repeating units of the general formula I:

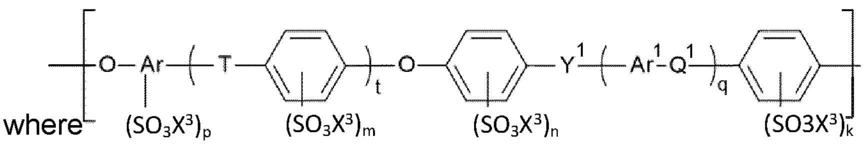

(I)

where

t and q : are each independently 0, 1, 2 or 3,

$Q^1$, T and $Y^1$: are each independently a chemical bond or selected from -O-, -S-, $-SO_2-$, -S(=O)-, -C(=O)-, -N=N-, and $-CR^aR^b-$, wherein $R^a$ and $R^b$ are each independently a hydrogen atom or a $C_1$-$C_{12}$-alkyl, $C_1$-$C_{12}$-alkoxy or $C_6$-$C_{18}$-aryl group, and wherein at least one of Q, T and Y is $-SO_2-$,

Ar and $Ar^1$: are each independently $C_6$-$C_{18}$ aryl, wherein said $C_6$-$C_{18}$ aryl is unsubstituted or substituted with at least one substituent selected from $C_1$-$C_{12}$ alkyl, $C_1$-$C_{12}$ alkoxy, $C_6$-$C_{18}$ aryl, halogen and $-SO_3X$,

p, m, n, and k: are each independently 0, 1, 2, 3 or 4, with the proviso that the sum total of p, m, n and k is not less than 1, and

$X^3$: is hydrogen or one cation equivalent.

Another object of the present invention, therefore, is a process, wherein the sulfonated polyarylenesulfone polymer (sP) obtained in step i) comprises repeating units of the general formula (I) as defined above.

In a preferred embodiment the sulfonated polyarylenesulfone polymer (sP) obtained in step i) comprises at least 80 mol.-% of repeating units of the general formula (I) based on the total molar amount of the sulfonated polyarylenesulfone polymer (sP) obtained in step i).

If $Q^1$, T, or $Y^1$, with the abovementioned preconditions, is a chemical bond, this means that the adjacent group on the left-hand side and the adjacent group on the right-hand side have direct linkage to one another by way of a chemical bond.

$R^a$ and $R^b$ are each independently hydrogen or $C_1$-$C_{12}$ alkyl.

Preferred $C_1$-$C_{12}$ alkyl groups include linear and branched, saturated alkyl groups of 1 to 12 carbon atoms. The following moieties are suitable in particular: $C_1$-$C_6$ alkyl, such as methyl, ethyl, n-propyl, i-propyl, n-butyl, sec-butyl, 2- or 3-methylpentyl or comparatively long-chain moieties such as unbranched heptyl, octyl, nonyl, decyl, undecyl, lauryl, and the branched analogs thereof.

Alkyl moieties in the $C_1$-$C_{12}$ alkoxy groups used include the above-defined alkyl groups of 1 to 12 carbon atoms. Preferably used cycloalkyl moieties include in particular $C_3$-$C_{12}$ cycloalkyl moieties, e.g., cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, -propyl, -butyl, -pentyl, -hexyl, -cyclohexylmethyl, -dimethyl, -trimethyl.

Ar and $Ar^1$ are each independently $C_6$-$C_{18}$ aryl. Proceeding from the starting materials hereinbelow, Ar preferably derives from an electron-rich aromatic substance very susceptible to electrophilic attack, preferably selected from the group consisting of sulfonated or unsulfonated hydroquinone, resorcinol, dihydroxynaphthalene, in particular 2,7-dihydroxynaphthalene. $Ar^1$ is preferably an unsubstituted $C_6$ or $C_{12}$ arylene group.

Ar and $Ar^1$ in the preferred embodiment of formula (I) are each preferably selected independently from sulfonated

or unsulfonated 1,4-phenylene, 1,3-phenylene, naphthylene, in particular 2,7-dihydroxynaphthalene and 4,4'-bisphenylene.

Preferred are sulfonated polyarylenesulfone polymers (sP) having one or more of the following structural units (Ia) to (Io):

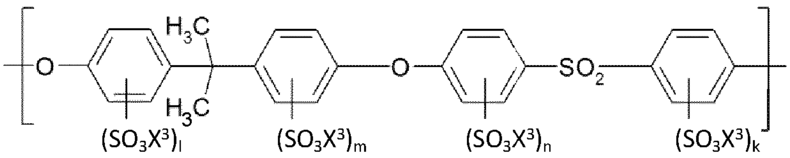
(Ia)

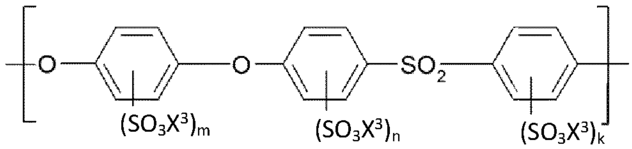
(Ib)

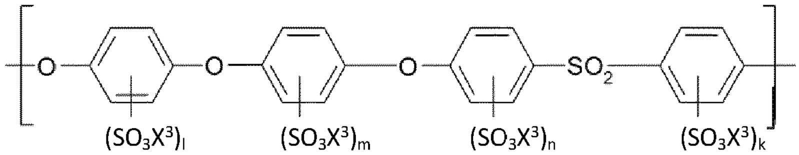
(Ic)

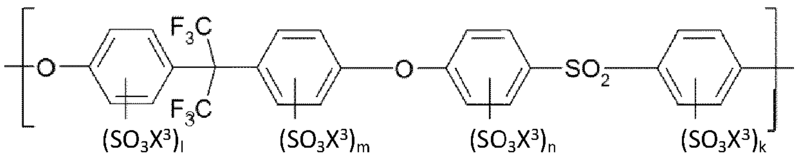
(Id)

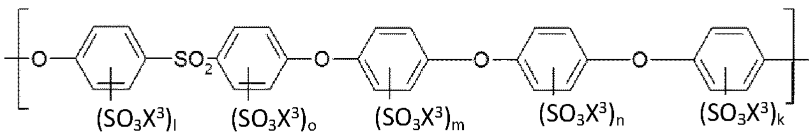
(Ie)

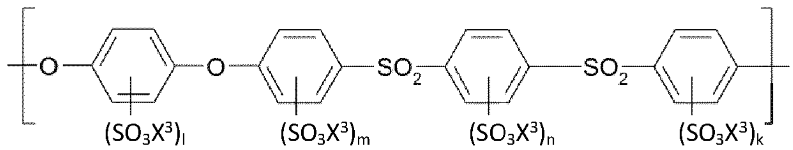
(If)

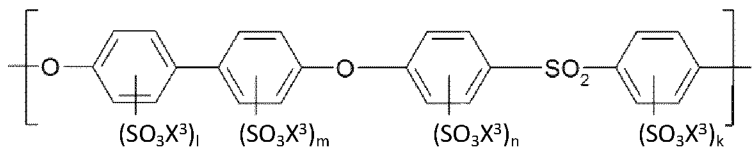
(Ig)

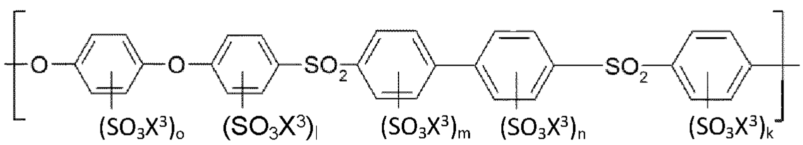
(Ih)

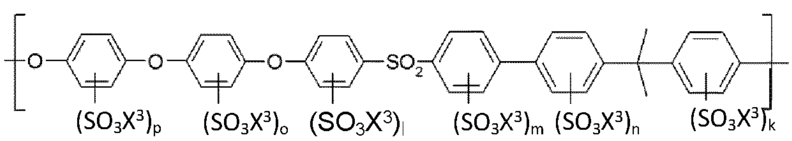
(Ij)

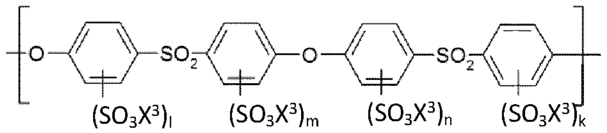

(Ik)

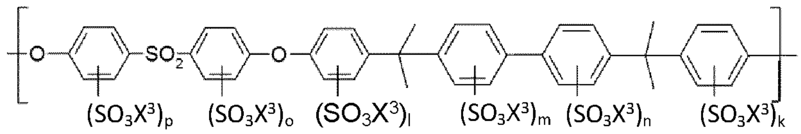

(Il)

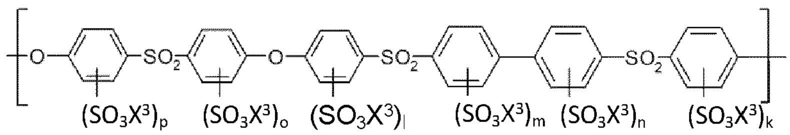

(Im)

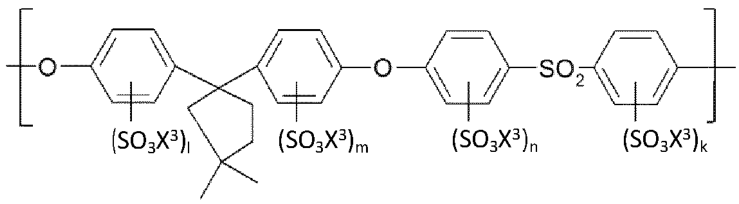

(In)

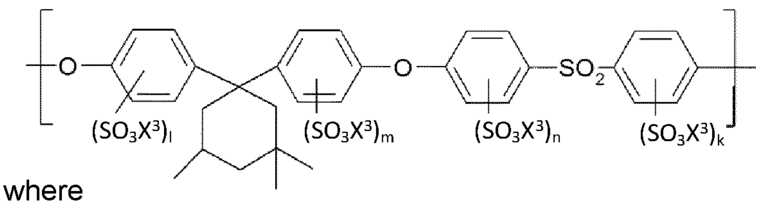

(Io)

where

l, k, m, n, o, p are each independently 0, 1, 2, 3 or 4 subject to the proviso that the sum total of l, k, m, n, o and p is ≥1, and $X^3$ is hydrogen or one cation equivalent.

By "one cation equivalent" in the context of the present invention is meant one cation of a single positive charge or one charge equivalent of a cation with two or more positive charges, for example Li, Na, K, Mg, Ca, $NH_4$, preferably Na, K.

In addition to the preferred building blocks (Ia) to (Io), preference is also given to those structural units in which one or more sulfonated or unsulfonated 1,4-dihydroxyphenyl units are replaced by resorcinol or dihydroxynaphthalene.

More preferred sulfonated polyarylenesulfone polymers (sP) are those comprising at least 80 mol.-%, especially preferred at least 90 mol.-%, and particularly preferred at least 98 mol.-% of one ore more of the units Ia to Io as repeat structural units based on the total molar amount of the sulfonated polyarylenesulfone polymer (sP) obtained in step i).

Particularly preferred sulfonated polyarylenesulfone polymers (sP) are those comprising at least 80 mol.-%, especially preferred at least 90 mol.-%, and particularly preferred at least 98 mol.-% of one ore more of the units Ia, Ig and/or Ik as repeat structural units based on the total molar amount of the sulfonated polyarylenesulfone polymer (sP) obtained in step i).

Particularly preferred the sulfonated polyarylenesulfone polymer (sP) is at least one polymer selected from the sulfonated polyphenylene sulfone (sPPSU), sulfonated polyethersulfon (sPESU) and sulfonated polysulfon (sPSU), wherein sulfonated polyphenylene sulfone (sPPSU) is especially preferred.

Sulfonated polyphenylene sulfone (sPPSU) is formed from the aforementioned repeat unit formula Ig. Sulfonated polysulfon (sPSU) is formed from the aforementioned repeat unit Ia. Sulfonated polyethersulfon (sPESU) is formed from the aforementioned repeat unit formula Ik.

Copolymers constructed of the various structural units in combination or of sulfonated and non-sulfonated structural units are also usable.

Structural units (Ia), (Ib), (Ig) and (Ik) or copolymers thereof are used with particular preference as repeat unit of general formula (I).

In one particularly preferred embodiment, Ar is 1,4-phenylene, t is 1, T is a chemical bond, $Y^1$ is $-SO_2-$, q is 0, p is 0, m is 0, n is 1 and k is 1. Sulfonated polyphenylenesulfones constructed of this recited structural repeat unit are denoted sPPSU.

In a particularly preferred embodiment, Ar is 1,4-phenylene, t is 0, Y is -$SO_2$-, q is 0, n is 0 and k is 0. Polyarylenesulfones constructed of this recited structural repeat unit are denoted sulfonated polyether ether sulfones (sPEES).

In one advantageous embodiment, the sulfonated polyarylenesulfone polymer (sP) obtained in step i) comprises

a non sulfonated repeat unit of formula (1)

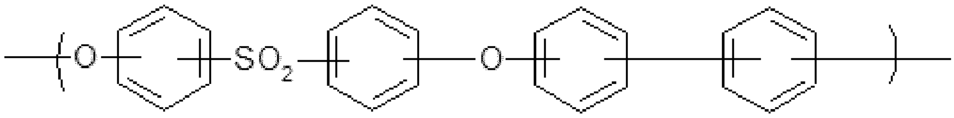

(1)

and a sulfonated repeat unit of formula (2)

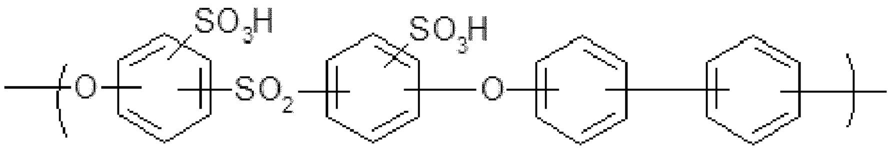

(2)

In particular, the sulfonated polyarylenesulfone polymer (sP) obtained in step i) consists exclusively of non-sulfonated repeating units of formula (1) and sulfonated repeat units of formula (2).

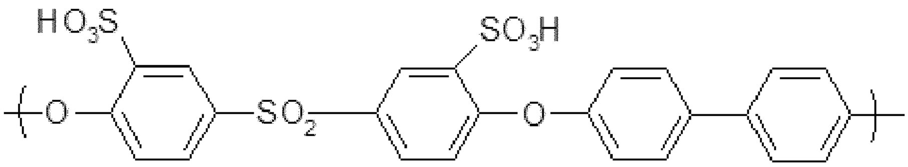

(1b)

The sulfonated polyarylenesulfone polymers (sP) obtained in step i) according to the present invention preferably have a viscosity number of 20 ml/g to 250 ml/g, preferably of 50 ml/g to 200 ml/g. This viscosity number is quantified according to DIN EN ISO 1628-1 in a 1% solution of N-methylpyrrolidone (NMP) at 25°C. The measurement can also be done at lower polymer concentration, e.g. 0.5%.

The weight average molecular weight ($M_W$) of the sulfonated polyarylenesulfone polymer (sP) obtained in step i) is generally in the range from 10 000 to 250 000 g/mol, preferably in the range from 15 000 to 200 000 g/mol and more preferably in the range from 18 000 to 150 000 g/mol. The weight average molecular weights ($M_W$) are measured using gel permeation chromatography (GPC). Dimethylacetamide (DMAc) was used as solvent and narrowly distributed polymethyl methacrylate was used as standard in the measurement.

*Step ii)*

In step ii) the inorganic halide compound formed in step i) during the condensation reaction is removed from the product mixture ($P_G$). To obtain a first solution (S1) comprising the sulfonated polyarylenesulfone polymer (sP) and component (D).

The inorganic halide compound can be removed by measures commonly known in the art like filtration, centrifugation, decantation etc..

The present invention therefore also provides a process wherein the process comprises the step

ii) filtration, centrifugation and/or decantation of the product mixture ($P_G$) obtained in step i) to obtain the first solution (S1).

In a preferred embodiment the first solution (S1) obtained in step ii) comprises no solid inorganic halide compounds. In a further preferred embodiment the first solution (S1) obtained in step ii) comprises less than 3 wt%, more preferred less than 1.5 wt% and particularly preferred less than 0.5 wt% of inorganic halide components based on the total weight of the first solution (S1) obtained in step ii).

In a more preferred embodiment the first solution (S1) obtained in step ii) comprises no solid inorganic compounds.

In a further preferred embodiment the first solution (S1) obtained in step ii) comprises less than 0.4 wt%, more preferred less than 0.3 wt% and particularly preferred less than 0.2 wt% of inorganic components based on the total weight of the first solution (S1) obtained in step ii).

In a preferred embodiment the sulfonated polyarylenesulfone polymer (sP) in step ii) is not separated from the first solution (S1).

In one embodiment between step ii) and step iii) no further process steps are conducted.

The sulfonated polyarylenesulfone polymer (sP) in the first solution (S1) in step ii) remains in dissolved form before step iii) is conducted.

*Step iii)*

In step iii) at least one further polymer (fP) is mixed with the first solution (S1) to obtain a second solution (S2). In step iii) additionally at least one one pore forming agent (pA) is mixed with the first solution (S1) to obtain the second solution (S2).

In a preferred embodiment in step iii) at least one further polymer (fP) and at least one one pore forming agent (pA) is mixed with the first solution (S1) to obtain the second solution (S2).

What is meant herein by “at least one further polymer (fP)” is precisely one further polymer (fP) and also mixtures of two or more further polymers (fP). What is meant herein by “at least one pore forming agent (pA)” is precisely one pore forming agent (pA) and also mixtures of two or more pore forming agents (pA).

The at least one further polymer (fP) is at least one polyarylenesulfone polymer which may be sulfonated or unsulfonated. The sulfonated polyarylenesulfone polymer (sP) and the at least one further polymer (fP) are different from each other. Preferably the at least one further polymer (fP) is at least one unsulfonated polyarylenesulfone polymer.

Preferred further polymers (fP) are those comprising at least one of the following units IIa to IIo as repeat structural units:

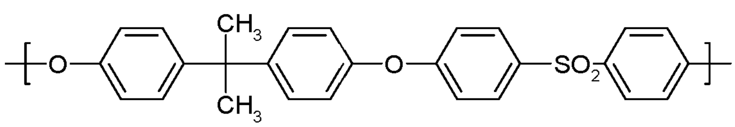

IIa

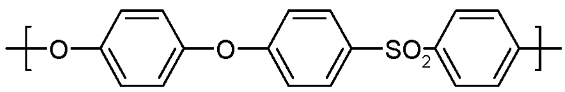
IIb

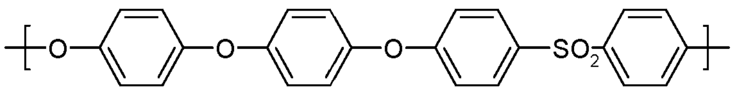
IIc

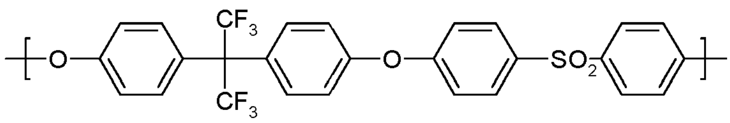
IId

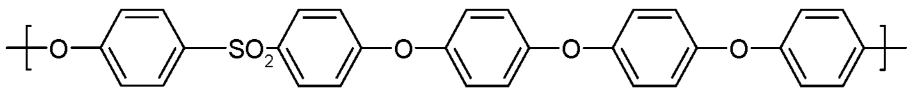
IIe

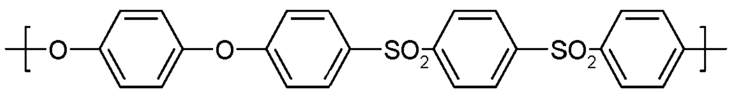
IIf

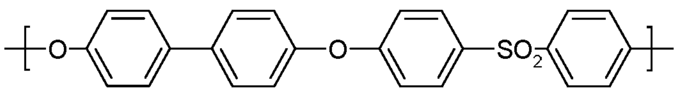
IIg

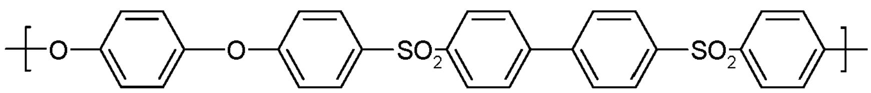
IIh

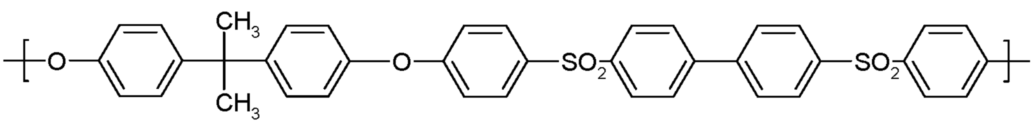
IIi

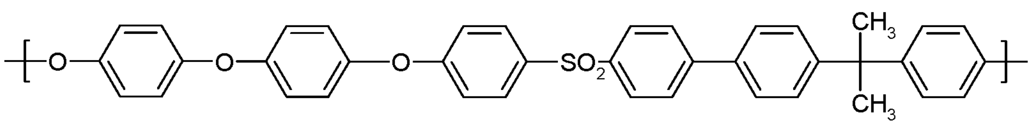
IIj

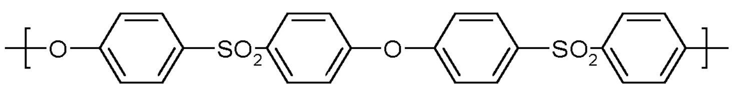
IIk

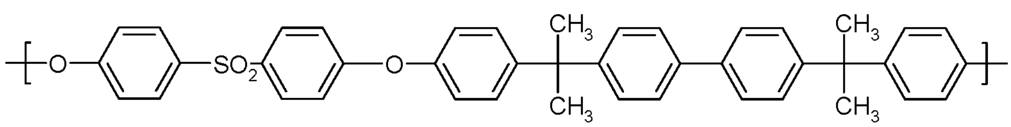
II I

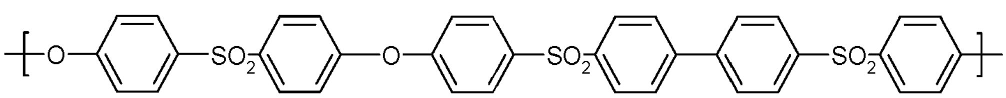
IIm

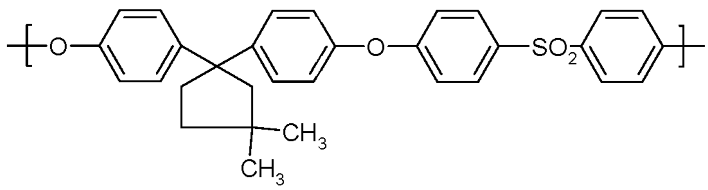

IIn

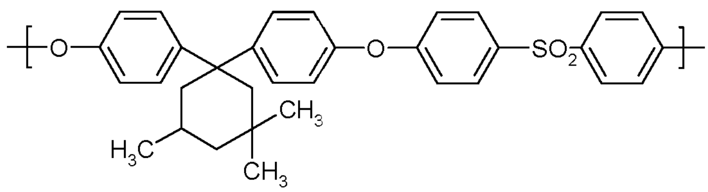

IIo

More preferred further polymers (fP) are those comprising at least 80 mol.-%, especially preferred at least 90 mol.-%, and particularly preferred at least 98 mol.-% of one ore more of the units IIa to IIo as repeat structural units based on the total molar amount of the further polymer (fP)

Particularly preferred are as further polymers (fP) are those comprising at least 80 mol.-%, especially preferred at least 90 mol.-%, and particularly preferred at least 98 mol.-% of one ore more of the units IIa, IIg and/or IIk as repeat structural units based on the total molar amount of the further polymer (fP).

Particularly preferred the further polymer (fP) is at least one polymer selected from the polyphenylene sulfone (PPSU), polyethersulfone (PESU) and polysulfone (PSU), wherein polyethersulfone (PESU) is especially preferred.

Polyphenylene sulfone (PPSU) is formed from the aforementioned repeat unit formula IIg. Polysulfone (PSU) is formed from the aforementioned repeat unit IIa. Polyethersulfone (PESU) is formed from the aforementioned repeat unit formula IIk.

Abbreviations such as PPSU, PESU and PSU in the context of the present invention conform to DIN EN ISO 1043-1 (Plastics - Symbols and abbreviated terms - Part 1: Basic polymers and their special characteristics (ISO 1043-1:2001); German version EN ISO 1043-1:2002).

Preferred pore forming agents (pA) are for example selected from the group consisting of polyvinylpyrrolidone (PVP) polyethylene oxides, polypropylene oxides and polyethylene oxide-polypropylene oxide-copolymers.

In step iv) the pore forming agent (pA), if present, is at least partially removed from the precipitated film and leaves pores in the membrane (M).

In a particularly preferred embodiment the sulfonated polyarylenesulfone polymer (sP) in the inventive process remains dissolved until step iv) is carried out.

In a further particularly preferred embodiment the sulfonated polyarylenesulfone polymer (sP) is not separated before step iv) is carried out. In other words the inventive process preferably comprises only one separation step (step iv)) of the sulfonated polyarylenesulfone polymer (sP), wherein the membrane (M) is formed.

*Step iv)*

In step iv) the at least one aprotic polar solvent is separated from the second solution (S2) to obtain the membrane (M). In a preferred embodiment the second solution (S2) is degassed before step iv) is carried out.

In step iv) the pore forming agent (pA), if added in step iii), is at least partially removed from the second solution (S2). "At least partially removed" in the context of the present invention means that at least 50 % of the total amount of pore forming agent (pA) added in step iii) is removed from the second solution (S2).

The separation of the at least one aprotic polar solvent from the second solution (S2) and, if present, the separation of the pore forming agent (pA) in step iv) can be performed by any method known to the skilled person which is suitable to separate aprotic solvents and pore forming agents from polymers.

Preferably, the separation of the at least one aprotic polar solvent from the second solution (S2) and, if present, the separation of the pore forming agent (pA) in step iv) is carried out via a phase inversion process.

A phase inversion process within the context of the present invention means a process wherein the dissolved sulfonated polyarylenesulfone polymer (sP) is transformed into a solid phase. Therefore, a phase inversion process can also be denoted as a precipitation process. According to step iv) the transformation is preferably performed by separation of the at least one aprotic polar solvent and, if present, the separation of the pore forming agent (pA) from the sulfonated polyarylenesulfone polymer (sP). The person skilled in the art knows suitable phase inversion processes.

The phase inversion process can preferably be performed by bringing the second solution (S2) into contact with a protic polar liquid that is a non-solvent for the sulfonated polyarylenesulfone polymer (sP) and in which the pore forming agent (pA) is soluble. The sulfonated polyarylenesulfone polymer (sP) will then precipitate. Suitable protic polar solvents

that are non-solvents for the sulfonated polyarylenesulfone polymer (sP)) are for example protic polar solvents described hereinafter in their liquid state. Another phase inversion process which is preferred within the context of the present invention is the phase inversion by immersing the second solution (S2) into at least one protic polar solvent.

Therefore, in one embodiment, in step iv) the at least one aprotic polar solvent comprised in the second solution (S2) is separated from the sulfonated polyarylenesulfone polymer (sP) comprised in the second solution (S2) by immersing the second solution (S2) into at least one protic polar solvent.

This means that the membrane (M) in step iv) is formed by immersing the second solution (S2) into at least one protic polar solvent.

Suitable at least one protic polar solvents are known to the skilled person. Preferred at least one of protic polar solvents are water, methanol, ethanol, n-propanol, isopropanol, glycerol, ethylene glycol and mixtures thereof.

Therefore, in one preferred embodiment, step iv) comprise the following steps:

iv-1) casting the second solution (S2) provided in step iii) to obtain a film of the second solution (S2),
iv-2) separating the at least one aprotic polar solvent from the film of the solution (S) obtained in step iii-1) to obtain the membrane (M) which is in the form of a film.

The separating in step iv-2) can be carried out as described above. Preferably the separating in step iv-2) is carried out by by immersing the film of the second solution (S2) into at least one protic polar solvent.

Therefore, in a particularly preferred embodiment, step iv) comprise the following steps:

iv-1) casting the second solution (S2) provided in step iii) to obtain a film of the second solution (S2),

iv-2) immersing the film of the second solution (S2) obtained in step iv-1) into at least one protic polar solvent to obtain the membrane (M) which is in the form of a film.

In step iv-1), the second solution (S2) can be cast by any method known to the skilled person. Usually, the second solution (S2) is cast with a casting knife, a coma bar, a meyer bar, a slot die or a reverse roll which are preferably heated to a temperature in the range from 20 to 150 °C, preferably in the range from 40 to 100°C, more preferably between 60 and 85°C.

In step iv-1) the second solution (S2) is usually cast on a substrate (carrier material) that does not react with the sulfonated polyarylenesulfone polymer (sP) and/or the at least one solvent comprised in the second solution (S2).

Suitable substrates (carrier materials) are for example steel belts, drying cylinders or polymer films. The substrates (carrier materials) are generally not part of the finished membrane (M) but are only used for processing purpose.

It is also possible to cast the second solution (S2) on a porous support layer which becomes part of the membrane (M).

For the production of single bore hollow fibers or multiple bore hollow fibers step iv) may be performed by extruding the second solution (S2) through an extrusion nozzle with the required number of hollow needles. The coagulating liquid (the at least one protic solvent) is then injected through the hollow needles into the extruded second solution (S2) during extrusion, so that parallel continuous channels extending in extrusion direction are formed in the extruded second solution (S2). Preferably, the pore size on an outer surface of the extruded membrane (M) is controlled by bringing the outer surface after leaving the extrusion nozzle in contact with a mild coagulation agent such that the shape is fixed without active layer on the outer surface and subsequently the membrane is brought into contact with a strong coagulation agent, or the other way round.

<u>Membrane (M)</u>

The membrane (M) comprises

from 1 to 99.5 % by weight of the sulfonated polyarylenesulfone polymer (sP), and
from 0.5 to 99 % by weight the at least one further polymer (fP),
based on the total weight of the membrane (M).

Preferably, the membrane (M) comprises

from 2 to 97.5 % by weight of the sulfonated polyarylenesulfone polymer (sP), and
from 2.5 to 98 % by weight the at least one further polymer (fP),
based on the total weight of the membrane (M).

More preferred, the membrane (M) comprises

from 2.5 to 95 % by weight of the sulfonated polyarylenesulfone polymer (sP), and
from 5 to 97.5 % by weight the at least one further polymer (fP),
based on the total weight of the membrane (M).

Even more preferred, the membrane (M) comprises

from 3.5 to 90 % by weight of the sulfonated polyarylenesulfone polymer (sP), and
from 10 to 96.5 % by weight the at least one further polymer (fP),
based on the total weight of the membrane (M).

Particularly preferred, the membrane (M) comprises

from 5 to 90 % by weight of the sulfonated polyarylenesulfone polymer (sP), and
from 10 to 95 % by weight the at least one further polymer (fP),
based on the total weight of the membrane (M).

If a pore forming agent is present the membrane (M) generally comprises

from 1 to 99.45 % by weight of the sulfonated polyarylenesulfone polymer (sP),
from 0.5 to 98.95 % by weight the at least one further polymer (fP), and
from 0.05 to 10 % by weight of the pore forming agent (pA),
based on the total weight of the membrane (M).

Preferably the membrane (M) comprises

from 2 to 97.4 % by weight of the sulfonated polyarylenesulfone polymer (sP),
from 2.5 to 97.9 % by weight the at least one further polymer (fP), and
from 0.1 to 5 % by weight of the pore forming agent (pA),
based on the total weight of the membrane (M).

More preferred the membrane (M) comprises

from 2.5 to 94.85 % by weight of the sulfonated polyarylenesulfone polymer (sP),
from 5 to 97.35 % by weight the at least one further polymer (fP), and
from 0.15 to 4 % by weight of the pore forming agent (pA),
based on the total weight of the membrane (M).

Even more preferred the membrane (M) comprises

from 3.5 to 89.8 % by weight of the sulfonated polyarylenesulfone polymer (sP),
from 10 to 96.3 % by weight the at least one further polymer (fP), and
from 0.2 to 4 % by weight of the pore forming agent (pA),
based on the total weight of the membrane (M).

Particularly the membrane (M) comprises

from 5 to 89.8 % by weight of the sulfonated polyarylenesulfone polymer (sP),
from 10 to 94.8 % by weight the at least one further polymer (fP), and
from 0.2 to 3 % by weight of the pore forming agent (pA),
based on the total weight of the membrane (M).

The membrane (M) preferably has a pure water permeation of > 25 kg/(h $m^2$ bar), determined using a pressure cell with a diameter of 74 mm using ultrapure water (salt-free water, filtered by a Millipore UF-system) at 23 °C and 1 bar water pressure. The pure water permeation (PWP) is calculated as follows (equation (1)):

$$PWP = \frac{m}{A \times P \times t} \qquad (1)$$

PWP: pure water permeation [kg / bar h $m^2$]
m: mass of permeated water [kg]
A: membrane area [$m^2$]
P: pressure [bar]
t: time of the permeation experiment [h].

The membrane (M) preferably has a surface area of > 1 $m^2$/g, determined by gas-adsorption-desorption (GAD) experiments with nitrogen using the Brunauer-Emmet-Teller (BET) surface model.
In a preferred embodiment the membrane has a contact angle of 30 to 70°.
The contact angle is determined by time-resolved automated image analysis by Krüss DSA100 (A. KRÜSS Optronic GmbH, Hamburg, Germany) at 23°C placing 8 to 10 drops of deionized water with a volume of approximately 2 μL on the sample.

*Device comprising the membrane (M)*

Another object of the present invention is a device comprising a membrane (M) obtained by the inventive process. The device is preferably an ultrafiltration device.
Preferred ultrafiltration devices are selected from dialysis devices and pure water fabrication devices.
For the use of the membrane (M) obtained by the inventive process, in a preferred embodiment, the membrane (M) is activated. Activation may be carried out by contacting the membrane (M) with an aqueous acid solution like aqueous inorganic acids. Preferably an aqueous solution of sulfuric acid ($H_2SO_4$) is used for activation. The concentration of the aqueous acid solution is preferably in the range of 0.1 to 4.0 M. After contacting the membrane (M) with an aqueous acid solution like aqueous sulfuric acid the membrane may be contacted with water, preferably DI water. After activation the membrane (M) is typically obtained in the $H^+$-form.
In other words after activation the sulfonated polyarylenesulfone polymer (sP) contained in the membrane (M) comprise at least 70 mol.-%, more preferred at least 80 mol.-% and particularly preferred at least 90 mol.-% of -$SO_3H$ groups, based on the total molar amount of -$SO_3X^3$ groups contained in the sulfonated polyarylenesulfone polymer (sP).
The present invention is more particularly elucidated by the following examples without being restricted thereto.

Components used:

| | |
|---|---|
| DCDPS | 4,4'-dichlorodiphenyl sulfone, |
| sDCDPS | 4,4'-dichlorodiphenylsulfone-3,3'-disulfonic acid disodium salt |
| BP | 4,4'-dihydroxybiphenyl, |
| $K_2CO_3$: | potassium carbonate, anhydrous, average particle size 32.6 μm |
| NMP: | N-methylpyrrolidone, anhydrous |
| PVP: | polyvinylpyrollidone (Luvitec ® K40); pore forming agent (pA) |
| PESU: | polyethersulfone (Ultrason ® E 6020P); further polymer (fP) |

The viscosity number VN of the sulfonated polyarylenesulfone polymer (sP) was measured according to DIN ISO 1628-1 in a 1% by weight NMP solution.
The incorporation ratio (the incorporation rate) of the sDCDPS was determined by $^1$H-NMR in $CDCl_3$. Furthermore, the polymer content of the polymer solutions after filtration was also quantified by $^1$H-NMR in $CDCl_3$.
The isolation of the sulfonated polyarylenesulfone polymer (sP) unless otherwise indicated is carried out, by dripping an NMP solution of the sulfonated polyarylenesulfone polymers (sP) into isopropanol at room temperature. The drop height is 0.5 m. The throughput is about 2.5 l per hour. The precipitate obtained is then extracted with water (water throughput 160 l/h) at 85°C for twenty hours. The precipitate is then dried at a temperature below the glass transition temperature $T_g$ to a residual moisture content of less than 0.5% by weight.
The filtration of the product mixture was done in a heated metal pressure filter using a filter with a 5 μm pore size and 3 bar $N_2$-pressure. The filter was heated to 60°C to reduce the viscosity of the reaction mixture.
The yield of polymer after precipitation was determined gravimetrically.

Comparative example 1; C1p and C1sol:

In a 4-liter glass reactor fitted with a thermometer, a gas inlet tube and a Dean-Stark-trap, 470.942 g (1.64 mol) of DCDPS, 196.50 g (0.4 mol) of sDCDPS, 372.42 g (2.00 mol) BP and 304.052 g (2.20 mol) of potassium carbonate with a volume average particle size of 32.6 μm were suspended in 1250 ml NMP in a nitrogen atmosphere.
The mixture was heated to 190°C within one hour. In the following, the reaction time shall be understood to be the time during which the reaction mixture was maintained at 190°C. The water that was formed in the reaction was continuously removed by distillation.
After a reaction time of 16 hours, the reaction was stopped by the addition of 1750 ml NMP and cooling down to room temperature (within one hour). The potassium chloride formed in the reaction was removed by filtration. The obtained polymer solution was then separated in two parts. One part was precipitated in isopropanol, the resulting polymer precipitate was separated and then extracted with hot water (85°C) for 20 h. Then the precipitated material was dried at 120°C for 24 h at reduced pressure (< 100 mbar). The precipitated sulfonated polyarylenesulfone polymer (sP) is hereinafter denominated as (C1p).
The filtrate is hereinafter denominated as (C1sol). The filtrate was characterized by $^1$H-NMR (content of sDCDPS-based units, polymer content).

Comparative example 2; C2p and C2sol:

In a 4-liter glass reactor fitted with a thermometer, a gas inlet tube and a Dean-Stark-trap, 470.942 g (1.64 mol) of DCDPS, 196.50 g (0.4 mol) of sDCDPS, 372.42 g (2.00 mol) BP and 331.704 g (2.40 mol) of potassium carbonate with a volume average particle size of 32.6 μm were suspended in 1250 ml NMP in a nitrogen atmosphere.
The mixture was heated to 190°C within one hour. In the following, the reaction time shall be understood to be the time during which the reaction mixture was maintained at 190°C. The water that was formed in the reaction was continuously removed by distillation.
After a reaction time of 16 hours, the reaction was stopped by the addition of 1750 ml NMP and cooling down to room temperature (within one hour). The potassium chloride formed in the reaction was removed by filtration. The obtained polymer solution was then separated in two parts. One part was precipitated in isopropanol, separated and then extracted with hot water (85°C) for 20 h. Then the precipitated material was dried at 120°C for 24 h at reduced pressure (< 100 mbar). The precipitated sulfonated polyarylenesulfone polymer (sP) is hereinafter denominated as (Cp).
The filtrate is hereinafter denominated as (C2sol). The filtrate was characterized by $^1$H-NMR (content of sDCDPS-based units, polymer content).

Example 3:

In a 4-liter glass reactor fitted with a thermometer, a gas inlet tube and a Dean-Stark-trap, 470.942 g (1.64 mol) of DCDPS, 196.50 g (0.4 mol) of sDCDPS, 372.42 g (2.00 mol) BP and 359.35 g (2.60 mol) of potassium carbonate with a volume average particle size of 32.6 μm were suspended in 1250 ml NMP in a nitrogen atmosphere.
The mixture was heated to 190°C within one hour. In the following, the reaction time shall be understood to be the time during which the reaction mixture was maintained at 190°C. The water that was formed in the reaction was continuously removed by distillation.
After a reaction time of 7h, the reaction was stopped by the addition of 1750 ml NMP and cooling down to room temperature (within one hour). The potassium chloride formed in the reaction was removed by filtration. The obtained polymer solution was then separated in two parts. One part was precipitated in isopropanol (3p), separated and then extracted with hot water (85°C) for 20 h. Then the precipitated material was dried at 120°C for 24 h at reduced pressure (< 100 mbar). The precipitated sulfonated polyarylenesulfone polymer (sP) is hereinafter denominated as (C1p).
The filtrate is hereinafter denominated as (C1sol). The filtrate was characterized by $^1$H-NMR (content of sDCDPS-based units, polymer content).

Comparative example 4:

In a 4-liter glass reactor fitted with a thermometer, a gas inlet tube and a Dean-Stark-trap, 442.226 g (1.54 mol) of DCDPS, 245.625 g (0.50 mol) of sDCDPS, 372.42 g (2.00 mol) BP and 317.88 g (2.30 mol) of potassium carbonate with a volume average particle size of 32.6 μm were suspended in 1250 ml NMP in a nitrogen atmosphere.
The mixture was heated to 190°C within one hour. In the following, the reaction time shall be understood to be the time during which the reaction mixture was maintained at 190°C. The water that was formed in the reaction was continuously removed by distillation.
After a reaction time of 16 hours, the reaction was stopped by the addition of 2312 ml NMP and cooling down to

room temperature (within one hour). The potassium chloride formed in the reaction was removed by filtration. The obtained polymer solution was then precipitated in isopropanol, the resulting polymer beads were separated and then extracted with hot water (85°C) for 20 h. Then the precipitate was dried at 120°C for 24 h at reduced pressure (< 100 mbar). The precipitated sulfonated polyarylenesulfone polymer (sP) is hereinafter denominated as (C4p).

Example 5:

In a 4-liter glass reactor fitted with a thermometer, a gas inlet tube and a Dean-Stark-trap, 442.226 g (1.54 mol) of DCDPS, 245.625 g (0.50 mol) of sDCDPS, 372.42 g (2.00 mol) BP and 373.17 g (2.70 mol) of potassium carbonate with a volume average particle size of 32.6 μm were suspended in 1250 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 7.5 hours, the reaction was stopped by the addition of 2312 ml NMP and cooling down to room temperature (within one hour). The potassium chloride formed in the reaction was removed by filtration. The obtained polymer solution was then separated in two parts. One part was precipitated in isopropanol, separated and then extracted with hot water (85°C) for 20 h. Then the precipitated material was dried at 120°C for 24 h at reduced pressure (< 100 mbar). The precipitated sulfonated polyarylenesulfone polymer (sP) is hereinafter denominated as (5p).

The filtrate is hereinafter denominated as (5sol). The filtrate was characterized by $^{1}$H-NMR (content of sDCDPS-based units, polymer content).

The characterization of the precipitated sulfonated polyarylenesulfone polymer (sP) and the obtained solutions is shown in table 1:

**Table 1:**

| Example | C1p | C1sol | C2p | C2sol | 3p | 3sol | C4p | 5p | 5sol |
|---|---|---|---|---|---|---|---|---|---|
| Condensation time [h] | 16 | 16 | 16 | 16 | 7 | 7 | 16 | 7.5 | 7.5 |
| V.N [ml/g] | 41.7 | nd | 44.2 | nd | 67.8 | nd | 38.1 | 72.4 | nd |
| sDCDPS-cont. units [mol%] | 17.2 | 19.7 | 18.3 | 19.8 | 19.4 | 19.9 | 22.3 | 23.9 | 24.8 |
| Polymer content [wt%] | 100 | 22.8 | 100 | 22.7 | 100 | 22.7 | 100 | 100 | 20.5 |

Using the inventive excess of potassium carbonate, high molecular weight copolymers with a high amount of incorporated sDCDPs can be prepared.

*Membrane preparation*

For the membrane preparation different solutions comprising sulfonated polyarylenesulfone polymer (sP), NMP, PVP and PESU were prepared. In the inventive examples the obtained solutions of the sulfonated polyarylenesulfone polymers (sP) were used, while in the comparative examples the precipitates of the sulfonated polyarylenesulfone polymers (sP) were used.

The amounts of the components (sulfonated polyarylenesulfone polymer (sP), NMP, PVP and PESU) used for the preparation of the membrane forming solutions is shown in table 2.

The components were given into a three neck flask equipped with a magnetic stirrer. The mixture is heated under gentle stirring at 60°C until a homogeneous clear viscous solution is obtained. The solution is degassed overnight at room temperature. After that the membrane solution is reheated at 60°C for 2 hours and casted onto a glass plate with a casting knife (300 microns) at 60°C using an Erichsen Coating machine operating at a speed of 5 mm/min. The membrane film is allowed to rest for 30 seconds before immersion in a water bath at 25°C for 10 minutes.

After the membrane has detached from the glass plate, the membrane is carefully transferred into a water bath for 12 h. Afterwards the membrane is transferred into a bath containing 2000 ppm NaOCl at 50°C for 4,5 h to remove PVP. After that process the membrane is washed with water at 60°C and the one time with a 0.5 wt.-% solution of NaBisulfite to remove active chlorine. After several washing steps with water the membrane was stored wet until characterization started.

A flat sheet continuous film with micro structural characteristics of UF membranes having dimension of at least 10x15 cm size is obtained. The membrane presents a top thin skin layer (1-10 microns) and a porous layer underneath (thickness: 100-150 microns). The results are given in table 2.

*Membrane characterization*

Using a pressure cell with a diameter of 60 mm, the pure water permeation (PWP) of the membranes was tested using ultrapure water (salt-free water, filtered by a Millipore UF-system). In a subsequent test, a solution of different PEG-Standards was filtered at a pressure of 0.15 bar. By GPC-measurement of the feed and the permeate, the molecular weight cut-off was determined.

The contact angle (CA) versus water was measured as described above.

The molecular weight cut off (MWCO) was determined as described above.

Table 2:

| **Solution** | M1C | M2C | M3 | M4C | M5 | M6 |
|---|---|---|---|---|---|---|
| PESU [wt%] | 15 | 13 | 13 | 13 | 13 | 12 |
| PVP [wt%] | 5 | 5 | 5 | 5 | 5 | 5 |
| 3p [wt%] | - | 2 | - | - | - | - |
| 3sol [wt%] | - | - | 8.87 | - | - | - |
| 5p [wt%] | - | - | - | 2 | - | - |
| 5sol [wt%] | - | - | - | - | 9.75 | 14.63 |
| NMP [wt%] | 80 | 80 | 73.33 | 80 | 72.25 | 68.37 |
| **Membrane** | | | | | | |
| PWP [kg/m$^2$*h*bar] | 440 | 550 | 630 | 600 | 720 | 810 |
| MWCO [kg/mol] | 83 | 76 | 70 | 71 | 65 | 60 |
| CA [°] | 72 | 68 | 63 | 66 | 61 | 57 |

The membranes obtained by the inventive process show higher water permeability at a comparable separation performance than the reference membrane and also a lower CA, which means they have improved hydrophilicity.

**Claims**

**1.** A process for the preparation of a membrane (M) containing a sulfonated polyarylenesulfone polymer (sP) and at least one further polymer (fP) comprising the steps

i) converting a reaction mixture ($R_G$) comprising

an aromatic dihalogensulfone component (component (A)) comprising at least one sulfonated aromatic dihalogensulfone (component (A1)), and at least one non sulfonated aromatic dihalogensulfone (component (A2)),
at least one aromatic dihydroxy compound (component (B)),
at least on carbonate compound (component (C)), and
at least one aprotic polar solvent (component (D)),
to obtain a product mixture ($P_G$) comprising the sulfonated polyarylenesulfone polymer (sP), the at least one aprotic polar solvent and at least one inorganic halide compound,

ii) separating the at least one inorganic halide compound from the product mixture ($P_G$) to obtain a first solution (S1) comprising the sulfonated polyarylenesulfone polymer (sP) and the at least one aprotic polar solvent,
iii) mixing at least one further polymer (fP) with the first solution (S1) to obtain a second solution (S2),
iv) separating the at least one aprotic polar solvent from the second solution (S2) to obtain the membrane (M) containing the sulfonated polyarylenesulfone polymer (sP) and the at least one further polymer (fP),

wherein in step iii) additionally at least one pore forming agent (pA) is mixed with the first solution (S1) to obtain the second solution (S2) and wherein the at least one further polymer (fP) is at least one polyarylenesulfone polymer which may be sulfonated or unsulfonated and wherein the sulfonated polyarylenesulfone polymer (sP) and the at least one further polymer (fP) are different from each other, wherein component (A1) comprises at least one compound selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt, and

component (A2) comprises not less than 80 wt% of at least one aromatic dihalogensulfone selected from the group consisting of 4,4'-dichlorodiphenylsulfone and 4,4'-difluorodiphenylsulfone, based on the overall weight of component (A2) in reaction mixture ($R_G$), and

component (B) is selected from the group consisting of 4,4'-dihydroxybiphenyl, 4,4'-dihydroxydiphenylsulfone, bisphenol A (2,2-bis(4-hydroxyphenyl)propane), 4,4'-dihydroxybenzophenone, hydroquinone and hydrochinone derivatives, and

in step i) a reaction mixture ($R_G$) is converted comprising

| | |
|---|---|
| X mol | of an aromatic dihalogensulfone component (component A)) comprising, based on the total molar amount of the aromatic dihalogensulfone component (component A)) in the reaction mixture ($R_G$), |
| $X^1$ mol.-% | of at least one sulfonated aromatic dihalogensulfone (component (A1)), and |
| $X^2$ mol.-% | of at least one non sulfonated aromatic dihalogensulfone (component (A2)), wherein |
| $X^1$ | is in the range of 2 to 70 and |
| $X^2$ | is in the range of 30 to 98, |
| Y mol | of at least one aromatic dihydroxy compound (component (B)) |
| Z mol | of at least one carbonate compound (component (C)), |

wherein

the ratio of X to Y is in the range of 0.95 to 1.08,

and wherein

Z is in the range of P to Q,

wherein P is calculated according to the following equation:

$$P = Y^*(1.05 + X^1/100^*1.05),$$

and wherein Q is calculated according to the following equation:

$$Q = Y^*(1.05 + X^1/100^*1.4),$$

wherein component (A) comprises 2 to 70 mol.- % of component (A1) and 30 to 98 mol.-% of component (A2) based on the total molar amount of component (A) in the reaction mixture ($R_G$) and wherein in step i) the molar ratio of component (A) to component (B) is from 0.95 to 1.08, and wherein

the sulfonated polyarylenesulfone polymer (sP) in the first solution (S1) in step ii) remains in dissolved form before step iii) is conducted.

**2.** The process according to claim 1, wherein component (B) comprises not less than 80 wt% 4,4'-dihydroxybiphenyl, based on the overall weight of component (B) in reaction mixture ($R_G$).

**3.** The process according to claim 1 or 2, wherein component (C) comprises not less than 50 wt% of potassium carbonate based on the total weight of component (C) in the reaction mixture ($R_G$).

**4.** The process according to any of claims 1 to 3, wherein component (D) comprises not less than 50 wt% of at least one solvent selected from the group consisting of N-methylpyrrolidone, N-dimethylacetamide, dimethylsulfoxide and dimethylformamide based on the total weight of component (D) in the reaction mixture ($R_G$).

**5.** The process according to any of claims 1 to 4, wherein step iv) comprise the following steps

iv-1) casting the second solution (S2) provided in step iii) to obtain a film of the second solution (S2),

iii-2) separating the at least one aprotic polar solvent from the film of the second solution (S2) obtained in step iv-1) to obtain the membrane (M) which is in the form of a film.

6. The process according to any of claims 1 to 5, wherein step iv) comprise the following steps

iv-1) casting the second solution (S2) provided in step iii) to obtain a film of the second solution (S2),
iii-2) immersing the film of the second solution (S2) obtained in step iv-1) into at least one protic solvent to obtain the membrane (M) which is in the form of a film.

7. Membrane (M) for ultrafiltration obtained by the process according to any of claims 1 to 6, wherein the membrane (M) comprises from 1 to 99.5% by weight of the sulfonated polyarylene sulfone polymer (sP) and from 0.5 to 99 % by weight of the at least one further polymer (fP), based in each case on the total weight of the membrane (M).

8. Device for ultrafiltration comprising a membrane (M) according to claim 7.

**Patentansprüche**

1. Verfahren zur Herstellung einer Membran (M), die ein sulfoniertes Polyarylensulfonpolymer (sP) und mindestens ein weiteres Polymer (fP) enthält, umfassend die Schritte

i) Umsetzen eines Reaktionsgemischs ($R_G$), umfassend

eine aromatische Dihalogensulfon-Komponente (Komponente (A)), umfassend
mindestens ein sulfoniertes aromatisches Dihalogensulfon (Komponente (A1)) und mindestens ein nicht sulfoniertes aromatisches Dihalogensulfon (Komponente (A2)),
mindestens eine aromatische Dihydroxyverbindung (Komponente (B)),
mindestens eine Carbonatverbindung (Komponente (C)) und mindestens ein aprotisches polares Lösungsmittel (Komponente (D)),
unter Erhalt eines Produktgemischs ($P_G$), das das sulfonierte Polyarylensulfonpolymer (sP), das mindestens eine aprotische polare Lösungsmittel und mindestens eine anorganische Halogenidverbindung umfasst,

ii) Abtrennen der mindestens einen anorganischen Halogenidverbindung aus dem Produktgemisch ($P_G$) unter Erhalt einer ersten Lösung (S1), die das sulfonierte Polyarylensulfonpolymer (sP) und das mindestens eine aprotische polare Lösungsmittel umfasst,
iii) Mischen mindestens eines weiteren Polymers (fP) mit der ersten Lösung (S1) unter Erhalt einer zweiten Lösung (S2),
iv) Abtrennen des mindestens einen aprotischen polaren Lösungsmittels aus der zweiten Lösung (S2) unter Erhalt der Membran (M), die das sulfonierte Polyarylensulfonpolymer (sP) und das mindestens eine weitere Polymer (fP) enthält,

wobei in Schritt iii) zusätzlich mindestens ein Porenbildner (pA) mit der ersten Lösung (S1) gemischt wird, um die zweite Lösung (S2) zu erhalten, und wobei es sich bei dem mindestens einen weiteren Polymer (fP) um mindestens ein Polyarylensulfonpolymer, das sulfoniert oder unsulfoniert sein kann, handelt und wobei das sulfonierte Polyarylensulfonpolymer (sP) und das mindestens eine weitere Polymer (fP) voneinander verschieden sind, wobei
Komponente (A1) mindestens eine Verbindung umfasst, die aus der Gruppe bestehend aus 4,4'-Dichlordiphenylsulfon-3,3'-disulfonsäure, 4,4'-Dichlordiphenylsulfon-3,3'-disulfonsäure-Dinatriumsalz, 4,4'-Dichlordiphenylsulfon-3,3'-disulfonsäure-Dikaliumsalz, 4,4'-Difluordiphenylsulfon-3,3'-disulfonsäure, 4,4'-Difluordiphenylsulfon-3,3'-disulfonsäure-Dinatriumsalz und 4,4'-Difluordiphenylsulfon-3,3'-disulfonsäure-Dikaliumsalz ausgewählt ist und
Komponente (A2) nicht weniger als 80 Gew.-% mindestens eines aromatischen Dihalogensulfons, das aus der Gruppe bestehend aus 4,4'-Dichlordiphenylsulfon und 4,4'-Difluordiphenylsulfon ausgewählt ist, bezogen auf das Gesamtgewicht von Komponente (A2) im Reaktionsgemisch ($R_G$), umfasst und
Komponente (B) aus der Gruppe bestehend aus 4,4'-Dihydroxybiphenyl, 4,4'-Dihydroxydiphenylsulfon, Bisphenol A (2,2-Bis(4-hydroxyphenyl)propan), 4,4'-Dihydroxybenzophenon, Hydrochinon und Hydrochinonderivaten ausgewählt ist und
in Schritt i) ein Reaktionsgemisch ($R_G$) umgesetzt wird, das Folgendes umfasst:

X mol einer aromatischen Dihalogensulfonkomponente (Komponente A)), umfassend, bezogen auf die gesamte molare Menge der aromatischen Dihalogensulfonkomponente (Komponente A)) im Reaktionsgemisch ($R_G$),
$X^1$ Mol-% mindestens eines sulfonierten aromatischen Dihalogensulfons (Komponente (A1)) und
$X^2$ Mol-% mindestens eines nicht sulfonierten aromatischen Dihalogensulfons (Komponente (A2)), wobei
$X^1$ im Bereich von 2 bis 70 liegt und
$X^2$ im Bereich von 30 bis 98 liegt,
Y mol mindestens einer aromatischen Dihydroxyverbindung (Komponente (B)),
Z mol mindestens einer Carbonatverbindung (Komponente (C)),
wobei
das Verhältnis von X zu Y im Bereich von 0,95 bis 1,08 liegt
und wobei
Z im Bereich von P bis Q liegt,
wobei P gemäß der folgenden Gleichung berechnet wird:

$$P = Y*(1{,}05 + X^1/100*1{,}05),$$

und wobei Q gemäß der folgenden Gleichung berechnet wird:

$$Q = Y*(1{,}05 + X^1/100*1{,}4),$$

wobei Komponente (A) 2 bis 70 Mol-% Komponente (A1) und 30 bis 98 Mol-% Komponente (A2), bezogen auf die gesamte molare Menge der Komponente (A) im Reaktionsgemisch ($R_G$), umfasst und wobei in Schritt i) das Molverhältnis von Komponente (A) zu Komponente (B) 0,95 bis 1,08 beträgt, und wobei
das sulfonierte Polyarylensulfonpolymer (sP) in der ersten Lösung (S1) in Schritt ii) vor der Durchführung von Schritt iii) in gelöster Form bleibt.

**2.** Verfahren nach Anspruch 1, wobei Komponente (B) nicht weniger als 80 Gew.-% 4,4'-Dihydroxybiphenyl, bezogen auf das Gesamtgewicht von Komponente (B) im Reaktionsgemisch ($R_G$), umfasst.

**3.** Verfahren nach Anspruch 1 oder 2, wobei Komponente (C) nicht weniger als 50 Gew.-% Kaliumcarbonat, bezogen auf das Gesamtgewicht von Komponente (C) im Reaktionsgemisch ($R_G$), umfasst.

**4.** Verfahren nach einem der Ansprüche 1 bis 3, wobei Komponente (D) nicht weniger als 50 Gew.-% mindestens eines Lösungsmittels, das aus der Gruppe bestehend aus N-Methylpyrrolidon, N-Dimethylacetamid, Dimethylsulfoxid und Dimethylformamid ausgewählt ist, bezogen auf das Gesamtgewicht von Komponente (D) im Reaktionsgemisch ($R_G$), umfasst.

**5.** Verfahren nach einem der Ansprüche 1 bis 4, wobei Schritt iv) die folgenden Schritte umfasst:

iv-1) Gießen der in Schritt iii) bereitgestellten zweiten Lösung (S2) unter Erhalt eines Films der zweiten Lösung (S2),
iii-2) Abtrennen des mindestens einen aprotischen polaren Lösungsmittels aus dem in Schritt iv-1) erhaltenen Film der zweiten Lösung (S2) unter Erhalt der Membran (M), die in Form eines Films vorliegt.

**6.** Verfahren nach einem der Ansprüche 1 bis 5, wobei Schritt iv) die folgenden Schritte umfasst:

iv-1) Gießen der in Schritt iii) bereitgestellten zweiten Lösung (S2) unter Erhalt eines Films der zweiten Lösung (S2),
iii-2) Eintauchen des in Schritt iv-1) erhaltenen Films der zweiten Lösung (S2) in mindestens ein protisches Lösungsmittel unter Erhalt der Membran (M), die in Form eines Films vorliegt.

**7.** Membran (M) für die Ultrafiltration, erhalten durch das Verfahren nach einem der Ansprüche 1 bis 6, wobei die Membran (M) 1 bis 99,5 Gew.-% des sulfonierten Polyarylensulfonpolymers (sP) und 0,5 bis 99 Gew.-% des mindestens einen weiteren Polymers (fP), jeweils bezogen auf das Gesamtgewicht der Membran (M), umfasst.

**8.** Vorrichtung zur Ultrafiltration, umfassend eine Membran (M) nach Anspruch 7.

## Revendications

**1.** Procédé pour la préparation d'une membrane (M) contenant un polymère de polyarylènesulfone sulfoné (sP) et au moins un autre polymère (fP) comprenant les étapes

i) conversion d'un mélange réactionnel ($R_G$) comprenant un composant dihalogénosulfone aromatique (composant (A)) comprenant

au moins une dihalogénosulfone aromatique sulfonée (composant (A1)), et au moins une dihalogénosulfone aromatique non sulfonée (composant (A2)),
au moins un composé dihydroxy aromatique (composant (B) au moins un composé carbonate (composant (C)), et
au moins un solvant polaire aprotique (composant (D)),
pour obtenir un mélange de produits ($P_G$) comprenant le polymère de polyarylènesulfone sulfoné (sP), l'au moins un solvant polaire aprotique et au moins un composé halogénure inorganique,

ii) séparation de l'au moins un composé halogénure inorganique du mélange de produits ($P_G$) pour obtenir une première solution (S1) comprenant le polymère de polyarylènesulfone sulfoné (sP) et l'au moins un solvant polaire aprotique,
iii) mélange d'au moins un autre polymère (fP) avec la première solution (S1) pour obtenir une deuxième solution (S2),
iv) séparation de l'au moins un solvant polaire aprotique de la deuxième solution (S2) pour obtenir la membrane (M) contenant le polymère de polyarylènesulfone sulfoné (sP) et l'au moins un autre polymère (fP),

dans lequel, dans l'étape iii), de plus au moins un agent porogène (pA) est mélangé avec la première solution (S1) pour obtenir la deuxième solution (S2) et dans lequel l'au moins un autre polymère (fP) est au moins un polymère de polyarylènesulfone pouvant être sulfoné ou non sulfoné et dans lequel le polymère de polyarylènesulfone sulfoné (sP) et l'au moins un autre polymère (fP) sont différents l'un autre, dans lequel un composant (A1) comprend au moins un composé choisi dans le groupe constitué par l'acide 4,4'-dichlorodiphénylsulfone-3,3'-disulfonique, le sel disodique de l'acide 4,4'-dichlorodiphénylsulfone-3,3'-disulfonique, le sel dipotassique de l'acide 4,4'-dichlorodiphénylsulfone-3,3'-disulfonique, l'acide 4,4'-difluorodiphénylsulfone-3,3'-disulfonique, le sel disodique de l'acide 4,4'-difluorodiphénylsulfone-3,3'-disulfonique et le sel dipotassique de l'acide 4,4'-difluorodiphénylsulfone-3,3'-disulfonique, et
un composant (A2) ne comprend pas moins de 80 % en poids d'au moins une dihalogénosulfone aromatique choisie dans le groupe constitué par la 4,4'-dichlorodiphénylsulfone et la 4,4'-difluorodiphénylsulfone, par rapport au poids total du composant (A2) dans le mélange réactionnel ($R_G$), et
un composant (B) est choisi dans le groupe constitué par le 4,4'-dihydroxybiphényle, la 4,4'-dihydroxydiphénylsulfone, le bisphénol A (2,2-bis(4-hydroxyphényl)propane), la 4,4'-dihydroxybenzophénone, l'hydroquinone et les dérivés d'hydrochinone, et
dans l'étape i) un mélange réactionnel ($R_G$) est converti comprenant
X moles d'un composant dihalogénosulfone aromatique (composant A)) comprenant, sur la base de la quantité molaire totale du composant dihalogénosulfone aromatique (composant A)) dans le mélange réactionnel ($R_G$),
$X^1$ % en moles d'au moins une dihalogénosulfone aromatique sulfonée (composant (A1)), et
$X^2$ % en moles d'au moins une dihalogénosulfone aromatique non sulfonée (composant (A2)), dans lequel
$X^1$ est dans la plage de 2 à 70 et
$X^2$ est dans la plage de 30 à 98,
Y moles d'au moins un composé dihydroxy aromatique (composant (B))
Z moles d'au moins un composé carbonate (composant (C)), dans lequel
le rapport de X sur Y est dans la plage de 0,95 à 1,08, et dans lequel
Z est dans la plage de P à Q,
dans lequel P est calculé selon l'équation suivante :

$$P = Y*(1,05 + X^1/100*1,5),$$

et dans lequel Q est calculé selon l'équation suivante :

$$Q = Y*(1,05 + X^1/100*1,4),$$

dans lequel le composant (A) comprend 2 à 70 % en moles de composant (A1) et 30 à 98 % en moles de composant (A2) sur la base de la quantité molaire totale du composant (A) dans le mélange réactionnel ($R_G$) et dans lequel, dans l'étape i), le rapport molaire du composant (A) sur le composant (B) est de 0,95 à 1,08, et dans lequel
le polymère de polyarylènesulfone sulfoné (sP) dans la première solution (S1) dans l'étape ii) reste sous forme dissoute avant que l'étape iii) ne soit conduite.

2. Procédé selon la revendication 1, dans lequel le composant (B) ne comprend pas moins de 80 % en poids de 4,4'-dihydroxybiphényle, par rapport au poids total du composant (B) dans le mélange réactionnel ($R_G$).

3. Procédé selon la revendication 1 ou 2, dans lequel le composant (C) ne comprend pas moins de 50 % en poids de carbonate de potassium par rapport au poids total du composant (C) dans le mélange réactionnel ($R_G$).

4. Procédé selon l'une quelconque des revendications 1 à 3, dans lequel le composant (D) ne comprend pas moins de 50 % en poids d'au moins un solvant choisi dans le groupe constitué par la N-méthylpyrrolidone, le N-diméthylacétamide, le diméthylsulfoxyde et le diméthylformamide, par rapport au poids total du composant (D) dans le mélange réactionnel ($R_G$).

5. Procédé selon l'une quelconque des revendications 1 à 4, dans lequel l'étape iv) comprend les étapes suivantes iv-1) coulée de la deuxième solution (S2) fournie dans l'étape iii) pour obtenir un film de la deuxième solution (S2),
iii-2) séparation de l'au moins un solvant polaire aprotique à partir du film de la deuxième solution (S2) obtenue à l'étape iv-1) pour obtenir la membrane (M) qui est sous la forme d'un film.

6. Procédé selon l'une quelconque des revendications 1 à 5, dans lequel l'étape iv) comprend les étapes suivantes iv-1) coulée de la deuxième solution (S2) fournie dans l'étape iii) pour obtenir un film de la deuxième solution (S2),
iii-2) immersion du film de la deuxième solution (S2) obtenue à l'étape iv-1) dans au moins un solvant protique pour obtenir la membrane (M) qui est sous la forme d'un film.

7. Membrane (M) pour ultrafiltration obtenue par le procédé selon l'une quelconque des revendications 1 à 6, dans laquelle la membrane (M) comprend de 1 à 99,5 % en poids du polymère de polyarylène sulfone sulfoné (sP) et de 0,5 à 99 % en poids de l'au moins un autre polymère (fP), chaque fois par rapport au poids total de la membrane (M).

8. Dispositif pour ultrafiltration comprenant une membrane (M) selon la revendication 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 297363 A
- EP 135130 A
- WO 2019016082 A1
- WO 2017148850 A1
- WO 2019016078 A1

### Non-patent literature cited in the description


- **E.M. KOCH** ; **H.-M. WALTER**. *Kunststoffe*, 1990, vol. 80, 1146
- **E. DÖRING**. *Kunststoffe*, 1990, vol. 80, 1149
- **N. INCHAURONDO-NEHM**. *Kunststoffe*, 2008, vol. 98, 190
- **N. A. HOENICH** ; **K. P. KATAPODIS**. *Biomaterials*, 2002, vol. 23, 3853
- **D. RANA et al.** Surface modifications for antifouling membranes. *Chemical Reviews*, 2010, vol. 110, 2448
- **R.N. JOHNSON**. *J. Polym. Sci. A*, 1967, vol. 1 5 (, 2375
- **J.E. MCGRATH**. *Polymer*, 1984, vol. 25, 1827